# EUROPEAN PATENT APPLICATION

(11) **EP 4 063 118 A1**
(43) Date of publication of application: **28.09.2022**
(21) Application number: 21165181.5
(22) Date of filing: 26.03.2021
(51) Int. Cl.: B33Y 70/00, C03B 19/06

(54) **MATERIAL AND PROCESS FOR FABRICATING AND SHAPING OF TRANSPARENT MULTICOMPONENT FUSED SILICA GLASSES**

(71) Applicant: Glassomer GmbH, 79110 Freiburg (DE); Albert-Ludwigs-Universität Freiburg, 79098 Freiburg (DE)
(72) Inventor: RAPP, Bastian, 79100 Freiburg (DE); KOTZ, Frederik, 79232 March (DE)
(74) Representative: Müller-Boré & Partner Patentanwälte PartG mbB

(57) **Abstract**

The present invention relates to a moldable nanocomposite for producing a transparent article made of multicomponent fused silica glass, the moldable nanocomposite comprising: an organic binder; and a fused silica glass powder dispersed in the organic binder, the fused silica glass powder comprising fused silica glass particles having a diameter in the range from 5 nm to 500 nm, wherein the fused silica glass powder is pre-modified and/or wherein at least one modifying agent is contained in the moldable nanocomposite, and wherein the content of the fused silica glass powder in the moldable nanocomposite is at least 5 parts per volume based on 100 parts per volume of the organic binder. Further, the present invention relates to a method of producing a transparent article made of multicomponent fused silica glass.

## Description

The present invention relates to a moldable nanocomposite for producing a transparent article made of multicomponent fused silica glass. Further, the present invention relates to a method of producing a transparent article made of multicomponent fused silica glass.

Fused silica glass is an important material due to its high optical transmission combined with its high thermal, chemical and mechanical stability. However, due to its high melting point, shaping of fused silica glass is intricate. Up to now, fused silica glass is mostly shaped into a predetermined geometric form by means of melt processing, grinding or etching. Recently, there has been introduced a novel concept which allows shaping of fused silica glass by means of additive manufacturing, as described in WO 2018/065093 A1. However, this approach is limited to the production of a transparent article made of monocomponent fused silica glass.

Accordingly, it is an object of the present invention to overcome the above drawbacks associated with the production of a transparent article made of multicomponent fused silica glass known in the art. In particular, the technical problem underlying the present invention is to provide means for producing a transparent article made of multicomponent fused silica glass which shall easily allow the shaping thereof into a predetermined geometric form.

The above technical problem underlying the present invention has been solved by providing the embodiments characterized in the appended claims.

In one aspect, the above technical problem has been solved by providing a moldable nanocomposite for producing a transparent article made of multicomponent fused silica glass, the moldable nanocomposite according to the present invention comprising:
an organic binder; and
a fused silica glass powder dispersed in the organic binder, the fused silica glass powder comprising fused silica glass particles having a diameter in the range from 5 nm to 500 nm,
wherein the fused silica glass powder is pre-modified and/or wherein at least one modifying agent is contained in the moldable nanocomposite, and
wherein the content of the fused silica glass powder in the moldable nanocomposite is at least 5 parts per volume based on 100 parts per volume of the organic binder.

In another aspect, the above technical problem has been solved by providing a method of producing a transparent article made of multicomponent fused silica glass, the method according to the present invention comprising the following steps (a) to (d):
(a) shaping the moldable nanocomposite according to the present invention into a predetermined geometric form before, during and/or after hardening of the organic binder, thereby obtaining a primary structure;
(b) debinding the primary structure obtained in step (a) by removing the organic binder, thereby obtaining a secondary structure, the secondary structure having cavities formed therein;
(c) optionally filling the cavities of the secondary structure obtained in step (b) with at least one additive; and
(d) sintering the secondary structure obtained in step (b) optionally filled with at least one additive in step (c), thereby obtaining the transparent article.

As surprisingly found by the present inventors, due to the above-defined characteristics, the moldable nanocomposite according to the present invention which is used in the method according to the present invention can yield a transparent article having a predetermined geometric form. The reason therefore lies in the moldable nanocomposite comprising the organic binder and the fused silica glass powder dispersed therein. As such, the moldable nanocomposite can be shaped into the predetermined geometric form without requiring any melt processing, grinding or etching. Since the fused silica glass powder is pre-modified and/or at least one modifying agent is contained in the moldable nanocomposite, the obtained transparent article having the predetermined geometric form is made of multicomponent fused silica glass, also referred to as functional fused silica glass. That is, the present invention allows to alter the chemical composition of fused silica glass and thereby also allows to alter the properties thereof, depending on the intended purpose of the transparent article to be obtained, by using an at least partially pre-modified fused silica glass powder comprising nanoparticles, or by using an unmodified fused silica glass powder comprising nanoparticles in combination with at least one modifying agent, or by using an at least partially pre-modified fused silica glass powder comprising nanoparticles in combination with at least one modifying agent.

Advantageously, as the moldable nanocomposite can be shaped into the predetermined geometric form by any suitable means known in the art, including subtractive manufacturing processes, additive manufacturing processes, replication processes, or combinations thereof, as described in more detail below, the predetermined geometric form is not further limited. Hence, the geometric form of the transparent article which is eventually obtained by debinding and sintering is not further limited, either. According to the present invention, the "transparent article having a predetermined geometric form" to be produced is understood as an article having any arbitrary form as long as the thickness of the same is typically more than 250 µm, preferably more than 600 µm, even more preferably at least 1.0 mm. In other words, the geometric form of the transparent article which is made of multicomponent fused silica glass originating from the moldable nanocomposite can be freely chosen, except for the thickness.

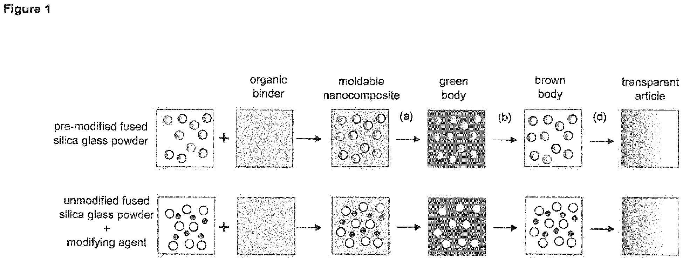

In the following, the moldable nanocomposite according to the present invention as well as the method according to the present invention are described in detail by reference to **Figure 1****,** the content of which is, however, not to be construed as limiting in any way.

According to the present invention, the nanocomposite for producing a transparent article made of multicomponent fused silica glass is moldable, which means that the organic binder thereof is in or transferable to a moldable state. With the organic binder being in or transferable to a moldable state, the moldable nanocomposite can be shaped into a predetermined geometric form by hardening the organic binder, as described further below in more detail.

As long as the organic binder is in or transferable to a moldable state, i.e. can be hardened, the organic binder is not further limited according to the present invention. As a result of hardening the organic binder, the primary structure obtained in step (a) maintains the predetermined geometric form into which the moldable nanocomposite has been shaped.

In one embodiment of the present invention, the organic binder is a thermoplastic which can be hardened upon cooling. Accordingly, cooling turns the softened thermoplastic into a solid so that the organic binder is no longer in a moldable state. As a result of hardening the thermoplastic used as the organic binder, the primary structure obtained in step (a) as described further below maintains its shape.

In case the organic binder is a thermoplastic, it may be selected from polyesters based on aromatic or aliphatic dicarboxylic acids and diols and/or hydroxycarboxylic acids, polycarbonates based on aliphatic or aromatic diols, polyolefins such as polyethylene, polypropylene, polybutene, polymethylpentene, polyisobutene, poly(ethylene-vinyl acetate), ethylene propylene rubber (EPR), poly(ethylene propylene diene), poly(vinyl butyral) (PVB), polyacrylates and polymethacrylates, cycloolefin polymers, as well as polyamides, polyacetals such as polyoxymethylene, polyethers such as polyethylene glycol (PEG), including aromatic polyethers based on bisphenols, or polyurethanes, or a combination thereof, without, however, being limited thereto.

In another embodiment of the present invention, the organic binder is a resin which can be hardened upon curing or polymerizing initiated by an external stimulus. In this context, as the external stimulus, heat or irradiation, in particular UV irradiation, may be mentioned. In some cases, mixing may be even sufficient as the external stimulus, e.g. in two-part resins, where the liquid constituents of the resin exhibit a sufficient reactivity towards each other. Further, as required, the external stimulus may include an initiator added to the organic binder for facilitating curing or polymerizing of the organic binder. Suitable initiators are known to the skilled person, such as acetophenones, e.g. 2,2-dimethoxy-2-phenylacetophenone (DMPAP), azo compounds, e.g. azobisisobutyronitrile (AIBN), benzophenone derivatives, fluorescein and its derivatives, e.g. rose bengal, quinones, e.g. camphorquinone, and phosphine derivatives, e.g. diphenyl(2,4,6-trimethylbenzoyl)phosphine oxide, without, however, being limited thereto. Accordingly, curing or polymerizing initiated by the external stimulus turns the liquid constituent(s) of the resin into a solid so that the organic binder is no longer in a moldable state. When exposed to the external stimulus, depending on the resin used, the resin is either cured which leads to a crosslinked structure or it is polymerized which leads to a non-crosslinked structure. In other words, the term "resin" as used herein not only encompasses thermosetting resins but also encompasses thermoplastic resins. That is, as the resin, any monomeric and/or oligomeric and/or polymeric composition may be mentioned herein without limitation. As a result of hardening the resin used as the organic binder, the primary structure obtained in step (a) as described further below maintains its shape.

In case the organic binder is a resin, it may be selected from acrylate resins and methacrylate resins, unsaturated polyester resins, vinyl ester resins, epoxy resins, thiol-ene resins, or polyurethane resins, without, however, being limited thereto. In particular, in case the organic binder is a resin, 2-hydroxyethyl methacrylate (HEMA) or a mixture of 2-hydroxyethyl methacrylate and tetraethylene glycol diacrylate (TEGDA) may be mentioned as the organic binder.

Apart from the organic binder, the moldable nanocomposite comprises a fused silica glass powder as an essential part. Herein, the term "fused silica glass powder" encompasses fused silica glass powder which may be unmodified, sometimes referred to herein as unmodified fused silica glass powder, but also encompasses fused silica glass powder which may be pre-modified, sometimes referred to herein as pre-modified fused silica glass powder. The fused silica glass powder is dispersed in the organic binder. Dispersion of the fused silica glass powder can be accomplished by any suitable means known in the art, depending on the organic binder used. In case a thermoplastic is used as the organic binder, the thermoplastic may be softened or it may be dissolved in a suitable organic solvent or gas phase before adding the fused silica glass powder thereto. In case a resin is used as the organic binder, the fused silica glass powder may be directly added to the liquid constituent(s) of the resin.

The particles comprised in the fused silica glass powder are also referred to as fused silica glass particles. According to the present invention, the fused silica glass powder comprises fused silica glass particles having a diameter in the range from 5 nm to 500 nm, preferably in the range from 7 nm to 400 nm, more preferably in the range from 10 nm to 300 nm, even more preferably in the range from 20 nm to 180 nm, and most preferably in the range from 30 nm to 150 nm. These particles are also referred to herein as the first type of particles. In addition thereto, the fused silica glass powder may comprise fused silica glass particles having a diameter in the range from 2 µm to 50 µm, preferably in the range from 2 µm to 40 µm. These particles are also referred to herein as the second type of particles. In case the fused silica glass powder comprises the first type of particles and the second type of particles, i.e. comprises a bimodal mixture of fused silica glass particles, the particles having the smaller diameter can fill the interstices between the particles having the larger diameter. Thereby, a denser packing of the fused silica glass particles in the moldable nanocomposite is achieved, which in turn leads to a smaller shrinkage during sintering in step (d) as described further below. In principle, the fused silica glass powder may further comprise any other type of fused silica glass particles with a diameter different from that of the first type of particles and different from that of the second type of particles. Such multimodal mixtures of fused silica glass particles are also within the scope of the present invention. In this context, it is the first type of particles having a diameter in the nanometer range which makes the composite comprising the organic binder and the fused silica glass powder dispersed therein a nanocomposite.

Herein, the diameter of the first, second and any other type of particles is to be understood as the mean average diameter which is measured in accordance with ISO 9276-2. According to the present invention, the fused silica glass particles need not be (perfectly) spherical. That is, the particles may also be spheroidal, i.e. they may be sphere-like. For example, as regards the first type of particles with a diameter in the range from 5 nm to 500 nm, preferably in the range from 7 nm to 400 nm, more preferably in the range from 10 nm to 300 nm, even more preferably in the range from 20 nm to 180 nm, and most preferably in the range from 30 nm to 150 nm, this means that these particles may substantially have no dimension in which the diameter is smaller than 5 nm, preferably no dimension in which the diameter is smaller than 7 nm, more preferably no dimension in which the diameter is smaller than 10 nm, even more preferably no dimension in which the diameter is smaller than 20 nm, and most preferably no dimension in which the diameter is smaller than 30 nm, and substantially no dimension in which the diameter is larger than 500 nm, preferably no dimension in which the diameter is larger than 400 nm, more preferably no dimension in which the diameter is larger than 300 nm, even more preferably no dimension in which the diameter is larger than 180 nm, and most preferably no dimension in which the diameter is larger than 150 nm.

According to the present invention, the fused silica glass powder is pre-modified and/or at least one modifying agent is contained in the moldable nanocomposite. That is, the moldable nanocomposite according to the present invention may comprise an at least partially pre-modified fused silica glass powder, or may comprise an unmodified fused silica glass powder in combination with at least one modifying agent, or may comprise an at least partially pre-modified fused silica glass powder in combination with at least one modifying agent. Herein, the term "at least partially pre-modified" means that an unmodified fused silica glass powder may be present in addition to the pre-modified fused silica glass powder.

As far as the pre-modification of the fused silica glass powder is concerned, the present invention is not particularly limited.

In this context, the term "pre-modification" means that the chemical composition of the fused silica glass powder is altered. In order to achieve such alteration, the fused silica glass powder may be pre-modified with a dopant, for instance. Without being limited thereto, the dopant may include one or more elements selected from the group consisting of Ag, Al, Au, B, Ti, F, Fe, Na, Ni, K, Ca, Cr, Ce, Co, Cu, Dy, Er, Eu, Gd, Ho, La, Lu, Nd, P, Pt, Pr, Pm, Rh, Sm, Sc, Tb, Tm, V, Yb, Y, Ge, Pb, Ba, Zr, Zn, and Mg. In accordance with the above considerations, in case the fused silica glass powder is pre-modified with a dopant, it is not required that each particle comprised in the fused silica glass powder is pre-modified with the dopant. That is, embodiments where some of the fused silica glass particles are pre-modified with the dopant while others are not, are also within the scope of the present invention. In other words, according to the present invention, it is sufficient that at least a part of the fused silica glass powder is pre-modified with a dopant. In order to obtain a fused silica glass powder pre-modified with a dopant, the latter is typically added already in the course of preparing the fused silica glass powder. For example, in case the dopant includes an element such as Al, B or Ti to yield a transparent article made of alumino-, boro- or titanosilicate glass, corresponding dopant reagents, e.g. di-sec-butoxyaluminoxytriethoxysilane, trimethyl-borate or tetraisopropylorthotitanate, are added to the raw material from which the fused silica glass powder is prepared.

As far as the at least one modifying agent is concerned, the present invention is not particularly limited, either.

In this context, the term "modifying agent" means that the chemical composition of the fused silica glass powder remains unaltered, but the chemical composition of the finally obtained glass which forms the transparent article after sintering is altered. In order to achieve such alteration, one or more dopant reagents may be contained in the moldable nanocomposite as the at least one modifying agent. Exemplary doping reagents include but are not limited to organoelement compounds, metal complexes and salts. Generally, the one or more dopant reagents used as the at least one modifying agent may also include those for the pre-modification mentioned above. Depending on the organic binder used, the at least one modifying agent is dispersed therein in finely divided domains ranging from separated or complexed ions to ionic clusters as well as organoelement phases. As it is clear to the skilled person, the at least one modifying agent provides for the one or more elements included in the dopant resulting from decomposition during sintering. For example, in order to obtain a transparent article made of Na₂O-SiO₂ glass, a modifying agent in form of a salt acting as a source for sodium ions, e.g. sodium methacrylate, may be added. A transparent article made of colored fused silica glass may be obtained by adding a salt acting as a source for coloring ions, e.g. chromium(III) nitrate orvanadium(III) chloride, yielding a transparent article made of green or blue fused silica glass, respectively.

According to the present invention, embodiments are encompassed where the fused silica glass powder, i.e. at least a part thereof, is pre-modified and at least one modifying agent is contained in the moldable nanocomposite. Thereby, it is easily possible to impart two or more functions to the fused silica glass. In these embodiments, the above considerations provided for the pre-modification of the fused silica glass powder as well as for the at least one modifying agent are equally applicable.

According to the present invention, the content of the fused silica glass powder in the moldable nanocomposite is at least 5 parts per volume, preferably at least 30 parts per volume, more preferably at least 35 parts per volume based on 100 parts per volume of the organic binder. The higher the content of the fused silica glass powder with respect to the organic binder, the denser the packing of the fused silica glass particles in the transparent article to be obtained. Surprisingly, even if the content of the fused silica glass powder with respect to the organic binder is rather high, e.g. 55 parts per volume based on 100 parts per volume of the organic binder or even more, it is still possible to shape the moldable nanocomposite into a predetermined geometric form in step (a) as described further below.

Apart from the organic binder with the fused silica glass powder dispersed therein, and, if present, the at least one modifying agent, the moldable nanocomposite may comprise one or more additional agents, as required, which facilitate the production of the transparent article to be obtained. According to the present invention, it is preferable that the content of any additional agents taken as a whole in the moldable nanocomposite does not amount to more than 20 mass%, more preferably not more than 15 mass%, even more preferably not more than 10 mass%, still even more preferably not more than 5 mass%, with the total mass of the moldable nanocomposite being 100 mass%. That is, the moldable nanocomposite according to the present invention essentially consists of the organic binder with the fused silica glass powder dispersed therein, and, if present, the at least one modifying agent, including any initiator added to the organic binder. Herein, the term "essentially consists of' means that the content of the organic binder with the fused silica glass powder dispersed therein, and, if present, the at least one modifying agent, including any initiator added to the organic binder, preferably amounts to at least 80 mass%, more preferably at least 85 mass%, even more preferably at least 90 mass%, still even more preferably at least 95 mass%, with the total mass of the moldable nanocomposite being 100 mass%.

For example, in order to facilitate dispersion of the fused silica glass powder in the organic binder, a dispersion agent may be added. As the dispersion agent, alcohols, nonionic surfactants, e.g. polyoxyethylene alkyl ether or polyoxymethylene, and anionic surfactants, e.g. fatty acids and their salts or aliphatic carboxylic acids and their salts, such as stearic acid and its salts or oleic acid and its salts, may be mentioned herein without limitation. Another example of a dispersion agent which may be suitably used in the present invention is 2-[2-(2-methoxyethoxy)ethoxy]acetic acid. According to the present invention, it is not necessary that a dispersion agent is present. That is, the present invention also encompasses embodiments, where the moldable nanocomposite does not contain any dispersion agent.

In order to facilitate debinding of the primary structure in step (b) as described further below, the moldable nanocomposite preferably further comprises a phase-forming agent dispersed in the organic binder. The phase-forming agent, which is solid or viscous at room temperature, understood herein as a temperature of 25 °C, forms an internal phase in the organic binder. Examples of the phase-forming agent include alcohols, ethers and silicone oils as well as combinations thereof, with these substances having a sufficiently high molecular weight and/or having appropriate functionalization so as to be solid or viscous at room temperature. Herein, the term "viscous" is to be understood as referring to a viscosity of at least 1 mPa·s at room temperature, as measured in accordance with DIN 53019. The phase-forming agent may be removed from the organic binder before or during debinding of the primary structure in step (b) as described further below, e.g. by means of thermal treatment which leads to the evaporation or sublimation of the phase-forming agent, or which leads to its decomposition. Further, the phase-forming agent may be removed by means of solvent or gas phase extraction.

As a specific example, phenoxyethanol (POE) may be mentioned as the phase-forming agent. POE has a viscosity of about 30 mPa_{·}s at room temperature, thus being a viscous substance. It can be evaporated at a temperature of 242 °C under atmospheric pressure. However, significant quantities thereof are already removed at lower temperatures due to its high vapor pressure. Further, PEG and 2-[2-(2-methoxyethoxy)ethoxy]acetic acid mentioned above may also act as the phase-forming agent.

Notably, once the primary structure has been formed, the organic binder is in a solid state (not a liquid, gel, or paste-like state). Herein, the moldable nanocomposite does not contain any thickening agent nor does it contain any low viscosity solvent like water.

According to a specific embodiment of the present invention, the moldable nanocomposite neither contains triglycerides, waxes, and paraffin nor contains any plasticizer such as phthalates and any derivatives thereof.

In step (a) of the method according to the present invention, the moldable nanocomposite according to the present invention, which has been described above in detail, is shaped into a predetermined geometric form before, during and/or after hardening of the organic binder. Thereby, a primary structure, also referred to as green body, is obtained. Depending on the organic binder used, hardening is either accomplished upon cooling or upon curing or polymerizing initiated by an external stimulus. The shape of the primary structure already reflects the shape of the transparent article obtained in step (d) as described further below.

Shaping of the moldable nanocomposite into the predetermined geometric form can be accomplished by any suitable means known in the art. In particular, the moldable nanocomposite may be shaped in step (a) by means of a subtractive manufacturing process, an additive manufacturing process, a replication process, or a combination thereof. Depending on the process(es) applied, the organic binder with the fused silica glass powder dispersed therein, and, if present, the at least one modifying agent, is hardened before, during and/or after shaping of the moldable nanocomposite.

In case of subtractive manufacturing processes, the organic binder with the fused silica glass powder dispersed therein, and, if present, the at least one modifying agent, is hardened before shaping of the moldable nanocomposite. In other words, the moldable nanocomposite is shaped into the predetermined geometric form after hardening of the organic binder. Suitable subtractive manufacturing processes include but are not limited to laser-based structuring techniques as well as CNC machining techniques such as milling, drilling, grinding, sawing, lathing, and polishing.

In case of additive manufacturing processes, the organic binder with the fused silica glass powder dispersed therein, and, if present, the at least one modifying agent, is hardened during shaping of the moldable nanocomposite. In other words, the moldable nanocomposite is shaped into the predetermined geometric form during hardening of the organic binder. Suitable additive manufacturing processes include but are not limited to selective laser sintering and selective laser melting, fused filament fabrication, also referred to as fused deposition modeling, stereolithography, two-photon polymerization, inkjet printing as well as volumetric printing techniques.

In case of replication processes, the organic binder with the fused silica glass powder dispersed therein, and, if present, the at least one modifying agent, is hardened after shaping of the moldable nanocomposite. In other words, the moldable nanocomposite is shaped into the predetermined geometric form before hardening of the organic binder. Suitable replication processes include but are not limited to casting, injection molding, (injection) compression molding, extrusion, thermoforming, cold or hot drawing, hot embossing, nanoimprinting as well as blow molding.

As already mentioned above, in order to shape the moldable nanocomposite into the predetermined geometric form, one or more subtractive manufacturing processes, additive manufacturing processes, and replication processes may be combined. For example, when the moldable nanocomposite is shaped by means of a replication process and the primary structure has visible artefacts resulting from said replication process, a subtractive manufacturing process may be applied to the primary structure as post-processing. Alternatively, coating techniques may be applied as post-processing in order to smoothen the surface of the primary structure obtained in step (a).

In step (b) of the method according to the present invention, the primary structure obtained in step (a) is debound by removing the organic binder. Thereby, a secondary structure, also referred to as brown body, is obtained. As a result of debinding the primary structure, i.e. removing the organic binder, the obtained secondary structure has cavities formed therein.

Depending on the organic binder used, the primary structure obtained in step (a) may be debound in step (b) by means of thermal treatment, chemical reaction, reduced pressure, solvent or gas phase extraction, or a combination thereof. For example, the primary structure may be first immersed in a solvent for carrying out solvent extraction before being thermally treated. In principle, any means may be applied which can remove the organic binder without adversely affecting the fused silica glass powder, and, if present, the at least one modifying agent, which form the secondary structure. In this context, a person skilled in the art routinely selects appropriate conditions to be applied for removing the organic binder in step (b).

For example, in case debinding is accomplished by means of thermal treatment, the temperature applied during debinding is typically in the range from 100 °C to 600 °C, e.g. in the range from 150 °C to 550 °C, the heating rate is typically in the range from 0.1 °C/minute to 5 °C/minute, e.g. in the range from 0.5 °C/minute to 1 °C/minute, and the holding time is typically in the range from 2 minutes to 12 hours, depending on the size of the transparent article to be obtained. In case the size thereof is rather small, already a few seconds may be sufficient for debinding the primary structure in step (b). According to the present invention, debinding by means of thermal treatment may also be carried out in a stepwise manner. In accordance with the above considerations, debinding by means of thermal treatment can be further facilitated by means of reduced pressure, i.e. sub-atmospheric pressure, which renders the organic binder more volatile.

After removal of the organic binder, the fused silica glass particles adhere together due to hydrogen bonds. Thereby, mechanical stability is imparted to the secondary structure. Taking account of the size of the fused silica glass particles, the diameter of which lies in the nanometer range, the fused silica glass particles have a high specific surface area which allows for sufficient interaction to keep the secondary structure mechanically stable. In case at least one modifying agent is contained in the moldable nanocomposite, the secondary structure is stabilized by the inherent cohesive forces of the at least one modifying agent as well as by its interaction with the fused silica glass particles comprised in the fused silica glass powder. As an example, an organoelement compound may interact via secondary forces such as hydrophobic interaction, vander-Waals forces, and hydrogen bonding, while metal complexes and salts form electrostatic interactions which stabilize the secondary structure. Generally, the secondary structure obtained in step (b) has an amorphous or semicrystalline morphology.

Before the organic binder is removed in step (b), or during the removal of the organic binder, the phase-forming agent, if present, is removed from the primary structure, e.g. by evaporation or sublimation, or by decomposition. Removal of the phase-forming agent, if present, can also be accomplished by means of solvent or gas phase extraction. In principle, the same means may be applied as described above in connection with the removal of the organic binder.

As a result of removing the phase-forming agent, if present, debinding of the primary structure in step (b) is facilitated. The reason therefore is that the internal phase formed by the phase-forming agent in the organic binder generates pores in the primary structure when it is removed. Through these pores, the organic binder that remains can then be removed in a more controlled manner. Thereby, the secondary structure is more easily prevented from being damaged, in particular when it adopts a thick structure. The same applies when the organic binder is removed in several steps. For example, in case the organic binder is a combination of two or more binder components exhibiting different thermal decomposition behavior, debinding may be accomplished sequentially. In this case, after having removed the first binder component, i.e. the binder component with the lowest decomposition temperature, the removal of the further binder component(s) is facilitated due to the pores generated in the primary structure after removal of the first binder component.

Debinding of the primary structure in step (b) also allows the removal of an immersed template structure that acts as a lost form within the primary structure. Once the immersed template structure which is solely composed of a material identical or chemically similar to the organic binder has been removed during debinding of the primary structure, the inverse thereof is left as a hollow structure within the obtained secondary structure. This modification is also referred to as sacrificial template replication.

In step (c) of the method according to the present invention, the cavities of the secondary structure obtained in step (b) may be filled with at least one additive, e.g. in order to achieve a further modification and/or in order to increase the density of the glass. According to the present invention, step (c) is optional. The at least one additive, also referred to as filler, necessarily has a suitable size so that it can be introduced into the cavities formed in the secondary structure. Herein, the at least one additive is not further limited and may be selected as appropriate.

Generally, the at least one additive may be identical to or may be different from the at least one modifying agent which may be contained in the moldable nanocomposite. In principle, as the at least one additive, any of the modifying agents described above may be appropriately selected. Accordingly, and further to what has been outlined above for the at least one modifying agent, organoelement compounds, metal complexes and salts may be used as the at least one additive, without, however, being limited thereto. Besides, the cavities of the secondary structure may be filled with a fused silica glass powder having the same chemical composition as the one present in the moldable nanocomposite, including a fused silica glass powder which is pre-modified with a dopant, for instance. As it is clear to the skilled person, in case a fused silica glass powder is used as the at least one additive, the glass particles comprised in the fused silica glass powder need to have a suitable diameter, i.e. a suitable size, further to what has been outlined above.

Without limitation, the at least one additive may be selected from glass precursors, such as silicon-based precursors like tetraethyl orthosilicate (Si(OC₂H₅)₄), also referred to as TEOS, for instance. In particular, glass precursors may be used herein as the at least one additive, forming glass which is not distinguishable from that of the fused silica glass particles in the moldable nanocomposite. However, it is also possible to use glass precursors herein as the at least one additive, forming glass which is different from that of the fused silica glass particles in the moldable nanocomposite. For example, it is possible to use a titanium-based precursor like tetraethyl orthotitanate (Ti(OC₂H₅)₄). Other metal alkoxides which may be used herein as the at least one additive include titanium isopropoxide, titanium ethoxide, zirconium ethoxide, aluminium isopropoxide, vanadyl isopropoxide, niobium ethoxide, tantalum ethoxide, and potassium tert-butoxide. Further suitable glass precursors are known to the skilled person, which may be used herein as well.

In the course of sintering the secondary structure to obtain the transparent article in step (d) as described further below, the fused silica glass powder, and, if present, the at least one modifying agent, which form the secondary structure, along with the at least one additive, if present, are converted into dense glass. By filling the secondary structure with at least one additive which is either made of glass or which can be reacted so as to be converted into glass, shrinkage of the secondary structure during sintering can be reduced.

According to the present invention, a transparent article made of multicomponent fused silica glass having a density comparable to modified fused silica glass which is processed in a conventional manner can be obtained. Even if the secondary structure is not filled with at least one additive in order to increase the density of the glass, the optical transmission at a wavelength in the range from 400 nm to 1000 nm of the transparent article obtained after sintering in step (d) as described further below is comparable to modified fused silica glass which is processed in a conventional manner.

The cavities of the secondary structure may be filled with the at least one additive in step (c) by immersing the secondary structure in a solution containing the at least one additive, exposing the secondary structure to physical or chemical vapor deposition in an atmosphere containing or generating the at least one additive, or a combination thereof. However, in principle, any other filling process may be applied in this respect as well. For example, it is also possible to apply a sol-gel process. Depending on the at least one additive with which the cavities of the secondary structure are filled in step (c), the secondary structure may be first immersed in a solution containing one of the additives, and may then be exposed to physical or chemical vapor deposition containing or generating another one of the additives. As appropriate, the cavities of the secondary structure may be filled with the at least one additive even before debinding of the primary structure is completed. In this case, it is the partially debound primary structure which is filled with the at least one additive.

In step (d) of the method according to the present invention, the secondary structure obtained in step (b) optionally filled with at least one additive in step (c) is sintered. Thereby, the transparent article is obtained. Suitable sintering conditions are known to the skilled person and are routinely selected as appropriate.

Without limitation, the temperature applied during sintering is typically in the range from 700 °C to 1250 °C, the heating rate is typically in the range from 1 °C/minute to 10 °C/minute, e.g. 3 °C/minute and 5 °C/minute, and the holding time is typically in the range from 0.5 hours to 8 hours, e.g. 4 hours, depending on the size of the transparent article to be obtained. According to the present invention, sintering may also be carried out in a stepwise manner. Further, in case organoelement compounds, metal complexes and salts are contained in the moldable nanocomposite as the at least one modifying agent, and/or in case the cavities of the secondary structure are filled therewith and/or with a glass precursor in step (c), pre-sintering at a comparatively low temperature, e.g. in the range from 400 °C to 700 °C, may be carried out in order to react the organoelement compounds, metal complexes and salts and/or the glass precursor so as to be converted into glass.

As required, in order to complete the conversion into dense glass, post-sintering may be carried out at a comparatively high temperature, e.g. in the range from 1250 °C to 1600 °C, for a comparatively short holding time, e.g. 1 minute. Typically, when carrying out post-sintering, the heating rate is rather high, e.g. 50 °C/minute.

According to the present invention, sintering does not require the application of pressure. On the contrary, sintering in step (d) can be suitably carried out at a pressure below atmospheric pressure, e.g. at a pressure of at most 0.1 mbar, preferably at most 0.01 mbar, and particularly preferably at most 0.001 mbar. Since sintering can be carried out at atmospheric pressure or even below, there are no particular requirements to be complied with in the present invention regarding the sintering furnace. Further, sintering can also be carried out in a flame or a continuous heat treatment.

After sintering, the obtained transparent article can be cooled to room temperature and used as obtained. Herein, the term "transparent" means an optical transmission of more than 10%, preferably more than 20%, more preferably more than 30%, and particularly preferably more than 40% at a wavelength in the range from 400 nm to 1000 nm for a thickness of 1.0 mm. That is, an article is to be understood herein as transparent when exhibiting an optical transmission of more than 10%, preferably more than 20%, more preferably more than 30%, and particularly preferably more than 40% at a wavelength in the range from 400 nm to 1000 nm for a thickness of 1.0 mm.

The transparent article made of multicomponent fused silica glass, which is obtainable from the moldable nanocomposite according to the present invention by the method according to the present invention, is suitable for a variety of different applications, among others, applications in the field of optics, e.g. as a lens. Since any suitable means known in the art, including subtractive manufacturing processes, additive manufacturing processes, replication processes, or combinations thereof, may be applied herein, the method according to the present invention making use of the moldable nanocomposite according to the present invention allows the production of the transparent article, the geometric form of which can be freely chosen, both with high throughput and with high resolution.

### The Figures show:

**Figure 1** shows the production of a transparent article in accordance with the present invention by making reference to steps (a), (b) and (d): (a) a primary structure, also referred to as green body, is obtained from a moldable nanocomposite comprising an organic binder and a pre-modified fused silica glass powder dispersed therein or comprising an organic binder and an unmodified fused silica glass powder dispersed therein along with a modifying agent; (b) a secondary structure, also referred to as brown body, is obtained from the primary structure; and (d) a transparent article made of multicomponent fused silica glass is obtained from the secondary structure. In **Figure 1,** step (c) which is optional has been omitted. Although not shown in **Figure 1****,** the moldable nanocomposite may also comprise the organic binder and the pre-modified fused silica glass powder dispersed therein along with the modifying agent.

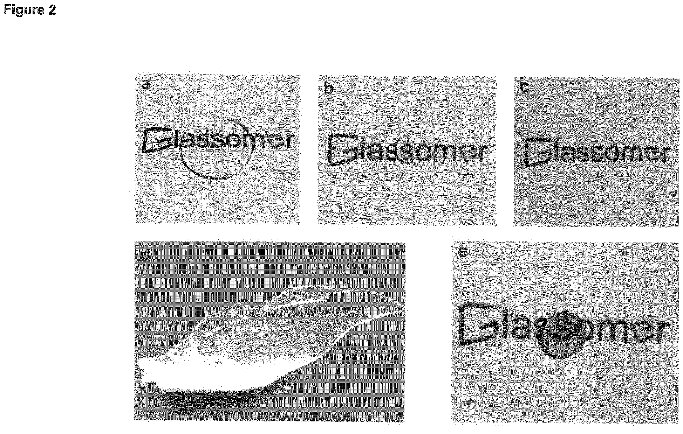

**Figure 2** shows respective transparent articles made of multicomponent fused silica glasses obtained in Examples 1 to 5 as described further below.

### Examples

The present invention is further illustrated by the following Working Examples without, however, being limited thereto.

### Example 1

### Production of a transparent article made of aluminosilicate glass

15 g of Al-doped fused silica glass powder containing 1.9 mass% of Al₂O₃ and having a particle diameter of 90 nm were dispersed in 11.25 mL of 2-hydroxyethyl methacrylate as the organic binder. 3.75 mL of phenoxyethanol were added as the phase-forming agent, and 0.6 g of 2,2-dimethoxy-2-phenylacetophenone were added as the initiator for facilitating photocuring of the organic binder.

The obtained moldable nanocomposite was shaped into a predetermined geometric form by means of stereolithography using a suitable stereolithography printer (Asiga Pico 2). Hardening of the organic binder was accomplished upon curing with light having a wavelength in the range from 300 nm to 400 nm as provided by a light source integrated in the printer, thereby obtaining a green body.

The organic binder was removed from the obtained green body by thermal debinding applying the following protocol, thereby obtaining a brown body:

| | | |
|---|---|---|
| • heating rate: 0.5 °C/minute: | 25 °C → 150 °C | holding time: 4 hours |
| • heating rate: 0.5 °C/minute: | 150 °C → 280 °C | holding time: 4 hours |
| • heating rate: 1 °C/minute: | 280 °C → 550 °C | holding time: 2 hours |
| • cooling rate: 5 °C/minute: | 550 °C → 25 °C | end |

The obtained brown body was sintered under atmospheric conditions applying the following protocol, thereby obtaining a transparent article made of aluminosilicate glass:

| | | |
|---|---|---|
| • heating rate: 5 °C/minute: | 25 °C → 800 °C | holding time: 2 hours |
| • heating rate: 3 °C/minute: | 800 °C → 1250 °C | holding time: 1.5 hours |
| • heating rate: 50 °C/minute: | 1250 °C → 1400 °C | holding time: 1 minute |
| • cooling rate: 20 °C/minute: | 1400 °C → 1300 °C | no holding time |
| • cooling rate: 5 °C/minute: | 1300 °C → 25 °C | end |

The obtained transparent article made of aluminosilicate glass is shown in **Figure 2(a)****.**

### Example 2

### Production of a transparent article made of borosilicate glass

15 g of B-doped fused silica glass powder containing 7.5 mass% of B₂O₃ and having a particle diameter in the range from 50 nm to 100 nm were dispersed in 11.25 mL of 2-hydroxyethyl methacrylate as the organic binder. 3.75 mL of phenoxyethanol were added as the phase-forming agent, and 0.6 g of 2,2-dimethoxy-2-phenylacetophenone were added as the initiator for facilitating photocuring of the organic binder.

The obtained moldable nanocomposite was shaped into a predetermined geometric form by means of stereolithography using a suitable stereolithography printer (Asiga Pico 2). Hardening of the organic binder was accomplished upon curing with light having a wavelength in the range from 300 nm to 400 nm as provided by a light source integrated in the printer, thereby obtaining a green body.

The organic binder was removed from the obtained green body by thermal debinding applying the protocol as described above for Example 1, thereby obtaining a brown body.

The obtained brown body was sintered under vacuum at a residual pressure of 0.01 mbar applying the following protocol, thereby obtaining a transparent article made of borosilicate glass:

| | | |
|---|---|---|
| • heating rate: 5 °C/minute: | 25 °C → 800 °C | holding time: 2 hours |
| • heating rate: 3 °C/minute: | 800 °C → 1100 °C | holding time: 3 hours |
| • cooling rate: 5 °C/minute: | 1100 °C → 25°C | end |

The obtained transparent article made of borosilicate glass is shown in **Figure 2(b)****.**

### Example 3

### Production of a transparent article made of titanosilicate glass

15 g of Ti-doped fused silica glass powder containing 4.5 mass% of TiO₂ and having a particle diameter in the range from 50 nm to 100 nm were dispersed in 11.25 mL of 2-hydroxyethyl methacrylate as the organic binder. 3.75 mL of phenoxyethanol were added as the phase-forming agent, and 0.6 g of 2,2-dimethoxy-2-phenylacetophenone were added as the initiator for facilitating photocuring of the organic binder.

The obtained moldable nanocomposite was shaped into a predetermined geometric form by means of stereolithography using a suitable stereolithography printer (Asiga Pico 2). Hardening of the organic binder was accomplished upon curing with light having a wavelength in the range from 300 nm to 400 nm as provided by a light source integrated in the printer, thereby obtaining a green body.

The organic binder was removed from the obtained green body by thermal debinding applying the protocol as described above for Example 1, thereby obtaining a brown body.

The obtained brown body was sintered under atmospheric conditions applying the following protocol, thereby obtaining a transparent article made of titanosilicate glass:

| | | |
|---|---|---|
| • heating rate: 5 °C/minute: | 25 °C → 800 °C | holding time: 2 hours |
| • heating rate: 3 °C/minute: | 800 °C → 1200 °C | holding time: 1.5 hours |
| • heating rate: 50 °C/minute: | 1200 °C → 1500 °C | holding time: 1 minute |
| • cooling rate: 50 °C/minute: | 1500 °C → 1300 °C | no holding time |
| • cooling rate: 5 °C/minute: | 1300 °C → 25 °C | end |

The obtained transparent article made of titanosilicate glass is shown in **Figure 2(c)****.**

### Example 4

### Production of a transparent article made of Na₂O-SiO₂ glass

89 g of fused silica glass powder having a particle diameter of 100 nm were dispersed in 30 mL of 2-hydroxyethyl methacrylate. 0.5 g of sodium methacylate were pre-dissolved in 0.5 mL of methacrylic acid and added as the modifying agent. 0.3 g of 2,2-dimethoxy-2-phenylacetophenone were added as the initiator for facilitating photocuring of the organic binder. Herein, 2-hydroxyethyl methacrylate and methacrylic acid acted as the organic binder.

The obtained moldable nanocomposite was shaped into a predetermined geometric form by means of casting against a silicone mold. Hardening of the organic binder was accomplished upon curing with light having a wavelength in the range from 300 nm to 400 nm, thereby obtaining a green body.

The organic binder was removed from the obtained green body by thermal debinding applying the protocol as described above for Example 1, thereby obtaining a brown body.

The obtained brown body was sintered in a flame at a temperature of 800 °C for 20 seconds, thereby obtaining a transparent article made of Na₂O-SiO₂ glass.

The obtained transparent article made of Na₂O-SiO₂ glass is shown in **Figure 2(d)****.**

### Example 5

### Production of a transparent article made of colored (green) fused silica glass

25 g of fused silica glass powder having a particle diameter in the range from 50 nm to 100 nm were dispersed in 8.25 mL of 2-hydroxyethyl methacrylate as the organic binder. 3.75 mL of phenoxyethanol were added as the phase-forming agent, 50 mg of chromium(III) nitrate were added as the modifying agent, and 0.6 g of 2,2-dimethoxy-2-phenylacetophenone were added as the initiator for facilitating photocuring of the organic binder.

The obtained moldable nanocomposite was shaped into a predetermined geometric form by means of stereolithography using a suitable stereolithography printer (Asiga Pico 2). Hardening of the organic binder was accomplished upon curing with light having a wavelength in the range from 300 nm to 400 nm as provided by a light source integrated in the printer, thereby obtaining a green body.

The organic binder was removed from the obtained green body by thermal debinding applying the protocol as described above for Example 1, thereby obtaining a brown body.

The obtained brown body was sintered under vacuum at a residual pressure of 0.01 mbar applying the following protocol, thereby obtaining a transparent article made of colored (green) fused silica glass:

| | | |
|---|---|---|
| • heating rate: 5 °C/minute: | 25 °C → 800 °C | holding time: 2 hours |
| • heating rate: 3 °C/minute: | 800 °C → 1300 °C | holding time: 1.5 hours |
| • cooling rate: 5 °C/minute: | 1300 °C → 25 °C | end |

The obtained transparent article made of colored (green) fused silica glass is shown in **Figure 2(e)****.**

## Claims

1. A moldable nanocomposite for producing a transparent article made of multicomponent fused silica glass, the moldable nanocomposite comprising:
an organic binder; and
a fused silica glass powder dispersed in the organic binder, the fused silica glass powder comprising fused silica glass particles having a diameter in the range from 5 nm to 500 nm,
wherein the fused silica glass powder is pre-modified and/or wherein at least one modifying agent is contained in the moldable nanocomposite, and
wherein the content of the fused silica glass powder in the moldable nanocomposite is at least 5 parts per volume based on 100 parts per volume of the organic binder.

2. The moldable nanocomposite according to claim 1, wherein the organic binder is a thermoplastic which can be hardened upon cooling.

3. The moldable nanocomposite according to claim 1, wherein the organic binder is a resin which can be hardened upon curing or polymerizing initiated by an external stimulus.

4. The moldable nanocomposite according to any one of claims 1 to 3, wherein the fused silica glass powder further comprises fused silica glass particles having a diameter in the range from 2 µm to 50 µm.

5. The moldable nanocomposite according to any one of claims 1 to 4, wherein the fused silica glass powder is pre-modified with a dopant.

6. The moldable nanocomposite according to claim 5, wherein the dopant includes one or more elements selected from the group consisting of Ag, Al, Au, B, Ti, F, Fe, Na, Ni, K, Ca, Cr, Ce, Co, Cu, Dy, Er, Eu, Gd, Ho, La, Lu, Nd, P, Pt, Pr, Pm, Rh, Sm, Sc, Tb, Tm, V, Yb, Y, Ge, Pb, Ba, Zr, Zn, and Mg.

7. The moldable nanocomposite according to any one of claims 1 to 6, wherein one or more dopant reagents selected from organoelement compounds, metal complexes and salts are contained in the moldable nanocomposite as the at least one modifying agent.

8. The moldable nanocomposite according to any one of claims 1 to 7, wherein the content of the fused silica glass powder in the moldable nanocomposite is at least 30 parts per volume based on 100 parts per volume of the organic binder.

9. The moldable nanocomposite according to any one of claims 1 to 8, further comprising a phase-forming agent dispersed in the organic binder.

10. A method of producing a transparent article made of multicomponent fused silica glass, the method comprising the following steps (a) to (d):
(a) shaping the moldable nanocomposite according to any one of claims 1 to 9 into a predetermined geometric form before, during and/or after hardening of the organic binder, thereby obtaining a primary structure;
(b) debinding the primary structure obtained in step (a) by removing the organic binder, thereby obtaining a secondary structure, the secondary structure having cavities formed therein;
(c) optionally filling the cavities of the secondary structure obtained in step (b) with at least one additive; and
(d) sintering the secondary structure obtained in step (b) optionally filled with at least one additive in step (c), thereby obtaining the transparent article.

11. The method according to claim 10, wherein the moldable nanocomposite is shaped in step (a) by means of a subtractive manufacturing process, an additive manufacturing process, a replication process, or a combination thereof.

12. The method according to claim 10 or 11, wherein the primary structure obtained in step (a) is debound in step (b) by means of thermal treatment, chemical reaction, reduced pressure, solvent or gas phase extraction, or a combination thereof.

13. The method according to any one of claims 10 to 12, wherein the cavities of the secondary structure obtained in step (b) are filled with at least one additive in step (c), the at least one additive being identical to or different from the at least one modifying agent contained in the moldable nanocomposite.

14. The method according to any one of claims 10 to 13, wherein the cavities of the secondary structure obtained in step (b) are filled with the at least one additive in step (c) by immersing the secondary structure in a solution containing the at least one additive, exposing the secondary structure to physical or chemical vapor deposition in an atmosphere containing or generating the at least one additive, or a combination thereof.
